# FASCICULE DE BREVET EUROPEEN

(11) **EP 2 809 044 B1**
(45) Date de publication et mention de la délivrance du brevet: **06.04.2016**
(21) Numéro de dépôt: 14169155.0
(22) Date de dépôt: 20.05.2014
(51) Int. Cl.: H04L 29/06, H04B 7/185, H04W 72/04, H04L 12/741

(54) **Procédés de transmission et de réception de données entre un terminal et une passerelle, en particulier via une liaison satellite**
Verfahren zur Datenübertragung und zum Datenempfang zwischen einem Endgerät und einer Schnittstelle, insbesondere über eine Satellitenverbindung
Methods for transmitting and receiving data between a terminal and a gateway, in particular via a satellite link

(30) Priorité: 31.05.2013 FR 1301238
(43) Date de publication de la demande: 03.12.2014
(73) Titulaire: Thales, 92200 Neuilly Sur Seine (FR); CENTRE NATIONAL D'ETUDES SPATIALES, 75001 Paris (FR)
(72) Inventeur: Baudoin, Cédric, 31400 TOULOUSE (FR); Arnal, Fabrice, 31270 CUGNAUX (FR)
(74) Mandataire: Priori, Enrico

(56) Documents cités:
- EP-A2- 1 298 887
- WO-A1-2008/038931
- NUAYMI L ET AL: "Headers Overhead Estimation, Header Suppression and Header Compression in WiMAX", WIRELESS AND MOBILE COMPUTING, NETWORKING AND COMMUNICATIONS, 2007. WIMOB 2007. THIRD IEEE INTERNATIONAL CONFERENCE ON, IEEE, PISCATAWAY, NJ, USA, 8 octobre 2007 (2007-10-08), page 17, XP031338300,

## Description

L'invention porte sur un procédé de transmission de données entre un terminal (ou une pluralité de terminaux) et une passerelle, ainsi que sur un procédé de réception desdites données. L'invention s'applique en particulier aux liaisons satellitaires et plus particulièrement encore à la transmission satellitaire de paquets Ethernet via le protocole DVB.

Le protocole Ethernet a été initialement conçu pour être utilisé dans les réseaux locaux (LAN, de l'anglais « Local Area Network »), mais son succès a été tel qu'il est à présent utilisé également pour réaliser des réseaux métropolitains (MAN, de l'anglais « Metropolitan Area Network ») voire des réseaux étendus (WAN, de l'anglais « Wide Area Network »), y compris utilisant des liaisons satellitaires. Dans ce dernier cas, des terminaux communiquent avec une ou plusieurs passerelles (« Gateways » en anglais) via un satellite, en échangeant des trames Ethernet encapsulées dans des paquets de plus bas niveau, par exemple des paquets DVB (« Digital Video Broadcast », c'est-à-dire « diffusion vidéo numérique »).

Chaque trame Ethernet - ainsi que chaque paquet DVB ou équivalent - comprend une « charge utile » et un en-tête, ce dernier comprenant notamment une adresse d'origine et une adresse de destination. La charge utile du paquet DVB est constituée par la trame Ethernet, y compris son en-tête. Ainsi, chaque couche de réseau ajoute un en-tête aux données échangées, ce qui engendre un surdébit (« overhead » en anglais).

En raison de leur taille importante, les en-têtes Ethernet-génèrent un surdébit significatif, conduisant à une forte dégradation de la capacité pour les solutions d'interconnexion de niveau 2, utilisées notamment pour les réseaux privés virtuels (VPN pour « Virtual Private Networks »), les réseaux de collecte ou d'amenée (« backhauling » en anglais) et de nombreux standards filaires ou sans fil. Ce surdébit constitue un frein au déploiement de solution de transport Ethernet natif dans les réseaux satellitaires.

Des procédés permettant la suppression des en-têtes sont connus ; on peut citer par exemple le procédé « PHS » (ce qui signifie précisément « Payload Header Suppression », c'est-à-dire « suppression des en-têtes des paquets »). Ce procédé comprend les étapes suivantes : tout d'abord, on identifie le « contexte » d'un paquet, ou trame, qui doit être transmis, c'est-à-dire un ensemble d'information permettant de définir un flux auquel appartient ledit paquet. Ce contexte détermine de manière univoque certains champs de l'en-tête du paquet (adresse d'origine, adresse de destination, longueur du paquet etc.), dits « statiques » car ils sont communs à un grand nombre de paquets échangés (tous ceux qui relèvent d'un même flux) ; puis on associe de manière biunivoque un identifiant à chaque dit contexte (PHSI : « PHS Identifier »). Ensuite, les champs « statiques » de l'en-tête sont supprimés, et remplacés par le seul identifiant du contexte. Ainsi l'en-tête est éliminé en totalité ou en partie avant transmission, et remplacé par un identifiant plus compact, ce qui entraine une forte réduction du surdébit.

Du côté de la réception, les champs supprimés de l'en-tête sont reconstitués à partir de l'identifiant de contexte. Toutefois, dans le cas d'une liaison terminal-passerelle, et plus particulièrement encore lorsqu'une telle liaison fait partie d'un système satellitaire, le nombre de flux - et donc de contextes différents - est très élevé. Cela signifie que les identifiants de contexte doivent comporter un nombre minimal d'octets (généralement 3 octets, permettant l'identification de plus de 16 millions de flux), ce qui limite le gain d'efficacité qui peut être obtenu. On considère par exemple le cas d'un paquet de voix ayant une charge utile de 20 octets et un en-tête DVB de trois octets ; le surdébit de trois octets supplémentaires introduit par l'identifiant de contexte représente 13% du débit.

Il existe également des techniques de compression d'en-tête, basées sur un codage différentiel (par exemple ROHC, pour « Robust Header Compression », c'est à dire « compression robuste des en-têtes »). Ces techniques sont plus élaborées que la simple suppression d'en-tête en permettant notamment de compresser certains champs dynamiques ; toutefois, elles n'ont été développées que pour les piles de niveau 3 (couche de réseau, par exemple IP) ou supérieur, et ne prennent donc pas en charge la compression des en-têtes Ethernet.

Des procédés de suppression et/ou compression d'en-tête selon l'art antérieur sont divulgués, par exemple, par les documents EP 1 298 887, WO 2008/03893 et par l'article de L. Nuaymi et al. « Headers Overhead Estimation, Header Suppression and Header Compression in WiMAX », 3rd IEEE International Conference on Wireless and Mobile Computing, Networking and Communications 2007 (WIMOB 2007), Piscataway NJ, Etats-Unis, 8 octobre 2007, page 17.

L'invention vise à surmonter les inconvénients précités de l'art antérieur et à permettre une réduction du surdébit engendré par les en-têtes lors de la transmission de trames Ethernet entre un terminal et une passerelle, en particulier via une liaison satellitaire.

Pour atteindre ce but, l'invention part du constat suivant. Dans une liaison terminal - passerelle, l'adresse d'accès au support (SVN-MAC par exemple en DVB-RCS2, label GSE en DVB-S2, Logonld/Groupld en DVB-RCS) contenue dans l'en-tête du paquet de niveau inférieur est redondante avec le contexte du flux Ethernet. En d'autres termes, l'identifiant de contexte (PHSI) qui remplace en tout ou en partie l'en-tête Ethernet et l'adresse d'accès au support dans l'en-tête de niveau inférieur véhiculent la même information. Il est donc possible de remplacer ladite adresse d'accès au support par le PHSI, et utiliser ce dernier pour réaliser le filtrage des flux. De cette façon, le PHSI ne vient pas s'ajouter à l'en-tête du paquet de niveau inférieur, mais remplace l'un de ses champs ; par conséquent, il n'entraine aucun surdébit.

Cette solution peut être couplée avec l'utilisation d'une méthode de suppression ou - mieux - compression des en-têtes des couches de niveau supérieur à Ethernet (notamment IP). Les deux méthodes sont mises en oeuvre de façon indépendante.

Un gain de débit additionnel peut être obtenu en supprimant les séquences de contrôle de trame (FCS, de l'anglais « Frame Control Sequence »). Cela est autorisé par les très faibles taux d'erreur binaire des liaisons satellitaires, de l'ordre de 10⁻¹⁰. La FCS est recalculée au niveau du récepteur, ce qui n'alourdit pas le traitement car la vérification de la séquence est équivalente à son calcul du point de vue de la charge de calcul.

Un objet de l'invention est donc un procédé de transmission de données entre un terminal et une passerelle les données étant transportées par des trames Ethernet comportant un en-tête Ethernet et une charge utile, elles-mêmes encapsulées dans des paquets de niveau inférieur comportant chacun un en-tête contenant une indication d'adresse d'accès au support, le procédé étant caractérisé en ce qu'il comprend les étapes suivantes :
a) déterminer des contextes communs à des trames dont les en-têtes Ethernet présentent des champs statiques, et définir un identifiant de chaque dit contexte ;
b) associer toutes ou partie desdites trames aux identifiants de contexte correspondants et supprimer lesdits champs de leurs en-têtes Ethernet ; et
c) introduire l'identifiant de contexte de chaque trame dont lesdits champs de l'en-tête Ethernet ont été supprimés dans l'en-tête du paquet de niveau inférieur l'encapsulant en remplacement de son indication d'adresse d'accès au support.
   Selon différentes caractéristiques avantageuses de l'invention, prises séparément ou en combinaison :
   - Le procédé peut comprendre également l'étape suivante :
d) supprimer des informations de contrôle de trame desdites trames Ethernet.
   - La transmission desdits paquets entre ledit terminal et ladite passerelle peut être réalisée au moyen d'une liaison satellitaire.
   - Lesdits paquets peuvent être transmis d'une passerelle vers un terminal et lesdits paquets de niveau inférieur peuvent être des paquets GSE.
   - Lesdits paquets peuvent être transmis d'un terminal vers une passerelle et lesdits paquets de niveau inférieur peuvent être des paquets RLE.
   - Les indications d'adresse d'accès au support des en-têtes desdits paquets de niveau inférieur peuvent être des adresses DVB.
   - Ladite étape a) de détermination des contextes et définition des identifiants peut être réalisée en créant, de manière statique, une pluralité de connexions entre des terminaux et ladite ou une dite passerelle, chaque connexion correspondant à un dit contexte.
   - Lors de ladite étape a), lesdits contextes peuvent être déterminés, et les identifiants correspondants sont définis, à la volée par ladite ou chaque passerelle et communiqués à un ou plusieurs dits terminaux.
   - Le procédé peut comporter également une étape de filtrage des flux au moyen des identifiants de contexte contenus dans les en-têtes desdits paquets de niveau inférieur.

Un autre objet de l'invention est un procédé de réception de données transmises entre un terminal et une passerelle, comportant les étapes suivantes :
i) recevoir des paquets de données comprenant chacun un en-tête et une charge utile, ladite charge utile contenant une trame Ethernet dont au moins certains champs de l'en-tête Ethernet ont été supprimés ;
ii) extraire un identifiant de contexte à partir d'un champ d'indication d'adresse d'accès au support de l'en-tête d'au moins un dit paquet; et
iii) à partir dudit identifiant, reconstruire les champs de l'en-tête Ethernet de ladite trame qui avaient été supprimés.

Selon différentes caractéristiques avantageuses de l'invention, prises séparément ou en combinaison :
- Ladite trame Ethernet peut ne pas comprendre d'informations de contrôle de trame, le procédé comportant également l'étape suivante :
   iv) recalculer des informations de contrôle de trame de ladite trame Ethernet à partir de sa charge utile et de son en-tête reconstruit et réintroduire cette information dans ladite trame.
- La transmission desdits paquets entre ledit terminal et ladite passerelle peut être effectuée au moyen d'une liaison satellitaire.
- Lesdits paquets peuvent être transmis d'une passerelle vers un terminal et lesdits paquets de niveau inférieur sont des paquets GSE.
- Lesdits paquets peuvent être transmis d'un terminal vers une passerelle et lesdits paquets de niveau inférieur sont des paquets RLE.
- Les indications d'adresse d'accès au support des en-têtes desdits paquets de niveau inférieur peuvent être des adresses DVB.
- Le procédé peut comporter une étape de constitution d'une base de données associant un ou plusieurs champs d'un en-tête Ethernet à chaque identifiant de contexte, ladite base de données étant utilisée pour la mise en oeuvre de ladite étape iii).
- Ladite étape de constitution d'une base de données peut être réalisée en créant, de manière statique, une pluralité de connexions entre des terminaux et ladite ou une dite passerelle, chaque connexion correspondant à un dit contexte.

En variante, lors de ladite étape de constitution d'une base de données, la passerelle peut identifier chaque nouveau contexte, déterminer un ou plusieurs champs d'en-tête Ethernet associés audit contexte et les communiquer à un terminal avec un identifiant de contexte correspondant.

D'autres caractéristiques, détails et avantages de l'invention ressortiront à la lecture de la description faite en référence aux dessins annexés donnés à titre d'exemple et qui représentent, respectivement :
- La figure 1, un système de communication satellitaire convenant à la mise en oeuvre des procédés de l'invention ;
- La figure 2A, un paquet DVB encapsulant une trame Ethernet conventionnelle conformément à l'art antérieur ;
- La figure 2B, un paquet DVB modifié conformément à un mode de réalisation l'invention ;
- La figure 2C, la mise en oeuvre d'une étape de suppression d'en-tête selon un mode de réalisation de l'invention ;
- La figure 3, la mise en oeuvre d'une étape de reconstruction d'en-tête selon un mode de réalisation de l'invention ; et
- La figure 4, la négociation entre une passerelle et un terminal pour identifier « à la volée » un contexte et définir l'identifiant correspondant.

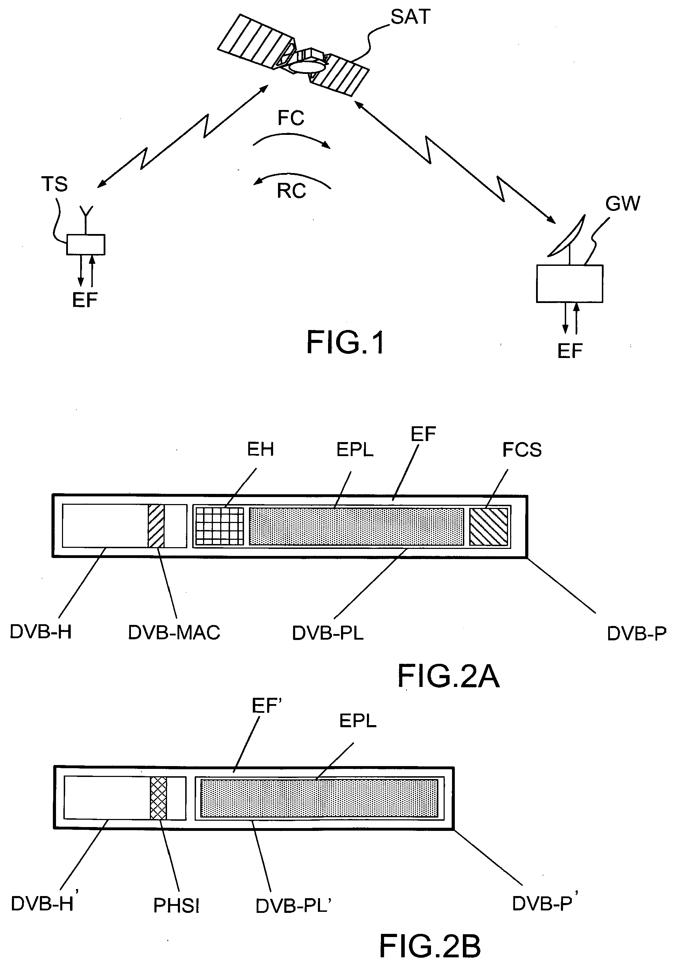

La figure 1 illustre, de manière très schématique, un système de communication satellitaire dans lequel la présente invention peut être mise en oeuvre. Ce système comprend une pluralité de terminaux TS (un seul est représenté) qui communiquent avec des passerelles GW par l'intermédiaire d'un satellite SAT. La communication se fait en échangeant des trames Ethernet EF qui sont encapsulées dans des paquets DVB avant transmission, et qui en sont extraites après réception. La communication est bidirectionnelle ; on appelle la liaison passerelle - terminal « canal aller » FC et la liaison terminal - passerelle « canal retour » RC. Ces deux liaisons peuvent utiliser des protocoles d'encapsulation et de transmission différents, par exemple GSE pour le canal aller et RLE pour le canal retour. L'invention permet d'augmenter le débit utile du système en réduisant le surdébit introduit par les en-têtes Ethernet, et cela aussi bien sur le canal aller que sur le canal retour.

La structure d'un paquet DVB conventionnel est illustrée sur la figure 2A sous la référence DVB-P. Un tel paquet contient un en-tête DVB-H et une charge utile DVB-PL. L'en-tête DVB-H contient, entre autres, une adresse d'accès au support DVB-MAC. La charge utile DVB-PL est constituée par une trame Ethernet EF, qui comprend à son tour un en-tête Ethernet EH, une charge utile Ethernet EPL et une séquence de contrôle de trame FCS. L'en-tête Ethernet EH contient, voire est uniquement constituée par, des champs dits « statiques », qui sont identiques dans toutes les trames d'un même flux ; il s'agit notamment des adresses d'origine et de destination.

Dans ces conditions, conformément au procédé PHS, les champs statiques des en-têtes Ethernet EH peuvent être remplacés par un identifiant de contexte PHSI, comportant un nombre inférieur d'octets ; par exemple, avec une longueur du PHSI de 3 octets il est possible de gérer plus de 16 millions de contextes, et donc de flux, différents.

Conformément à l'invention, toutefois, l'identifiant de contexte PHSI n'occupe pas la place des champs statiques qu'il remplace, mais celle des indications d'adresse(s) MAC (DVB) contenues dans l'en-tête DVB-H du paquet DVB-P. En effet, comme expliqué plus haut, dans le cas d'une communication entre un terminal et une passerelle, l'information véhiculée dans l'adresse MAC de l'en-tête DVB est redondante avec les champs statiques de l'en-tête de la trame Ethernet. Cette indication d'adresses MAC (DVB), redondante avec l'identifiant de contexte PHSI, n'est donc plus directement transportée, sans conséquence sur le reste des traitements. En particulier, le filtrage des flux peut se faire à partir des identifiants de contexte PHSI sans difficulté particulière.

Dans le mode de réalisation des figures 2A - 2C, l'en-tête Ethernet contient uniquement des champs statiques ; par conséquent elle peut être entièrement supprimée. Par ailleurs, comme mentionné plus haut, la séquence de contrôle de trame FCS peut également être supprimée à l'émission pour être reconstruite à la réception à partir de la charge utile et de l'en-tête Ethernet reconstituée EH. On obtient ainsi, comme illustré par la figure 2B, un paquet DVB modifié DVB-P' dont l'en-tête DVB-H' ne contient pas d'adresse MAC, mais un identifiant de contexte PHSI, et dont la charge utile DVBPL' contient une trame Ethernet modifiée EF' sans en-tête et sans séquence de contrôle FCS, coïncidant donc en pratique avec sa charge utile EPL (dans d'autres modes de réalisation, un en-tête réduit contenant uniquement des champs non-statiques pourrait subsister). Ce paquet DVB modifié est transmis par le système de la figure 1, l'identifiant de contexte PHSI étant utilisé, au niveau des terminaisons (TS et/ou GW) pour le filtrage des flux à la place de l'adresse MAC.

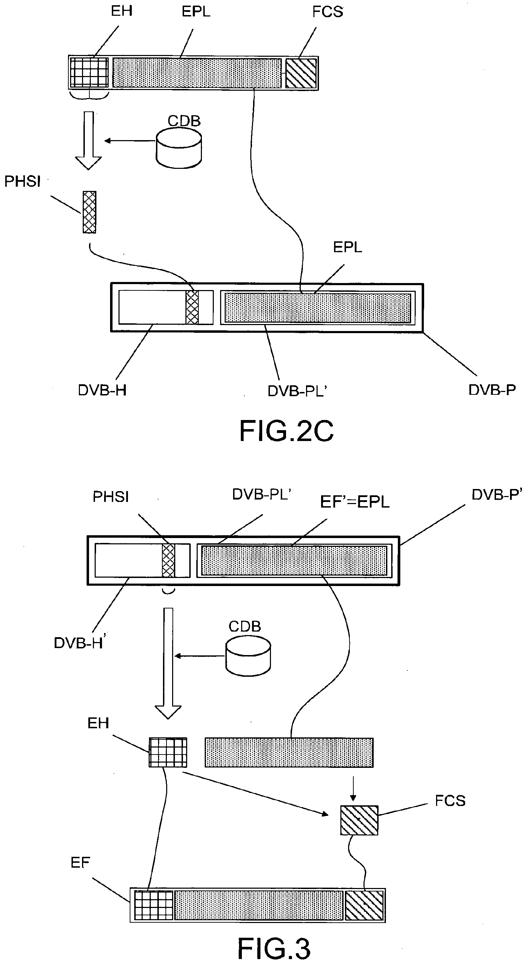

La figure 2C illustre l'étape de suppression de l'en-tête Ethernet (ainsi que de la séquence FCS) et son remplacement par un champ PHSI inséré dans l'en-tête DVB. Cette étape utilise une base de données CDB qui associe à chaque en-tête Ethernet (ou à chaque ensemble de champs statiques d'un tel en-tête) l'identifiant de contexte correspondant.

Du côté de la réception, on procède à la reconstitution de la trame Ethernet, comme illustré sur la figure 3. L'identifiant de contexte est extrait de l'en-tête DVBH' du paquet DVB modifié DVB-P' et utilisé pour interroger ladite base de données CDB, utilisée cette fois pour associer à chaque contexte l'en-tête Ethernet correspondant, qui est introduit au début de la trame Ethernet modifiée EF'. En outre, la séquence de contrôle FCS est recalculée à partir de la charge utile Ethernet EPL et de l'en-tête reconstituée EH, et introduite à la fin de la trame modifiée EF' pour reconstituer la trame Ethernet d'origine EF, qui peut être acheminée sur un réseau terrestre.

Il existe principalement deux façons de constituer la base de données CDB.

Selon un premier mode de réalisation de l'invention, elle est constituée de façon statique : lors de la paramétrisation « par management » des terminaux on crée une pluralité de connexions, correspondant chacune à un contexte respectif. L'ensemble des contextes gérés par le système est alors défini à l'avance.

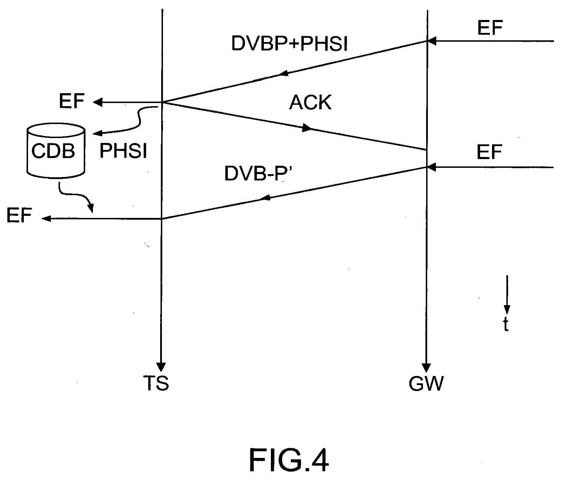

Une approche différente, utilisée dans d'autres modes de réalisation de l'invention, repose sur la configuration dynamique. Plusieurs méthodes peuvent être utilisées à cette fin, soit basées sur des protocoles de création dynamiques de VLAN (réseau privés virtuels), soit basées sur des protocoles accès de créations de connexions (type C2P), soit enfin en établissant les contextes de suppression d'entête (PHSI et champs statiques Ethernet) à la volée. Dans ce cadre, les VLANs peuvent être configurés dynamiquement ou non. Il convient alors de déterminer le contexte et le PHSI associé et de l'envoyer à l'autre extrémité de la liaison satellitaire via un protocole spécifique, similaire au cas du WiMAX avec PHS. Le choix du PHSI peut être réalisé de façon centralisé dans un centre d'opération du réseau (« Network Control Center », ou NCC). Un mode de réalisation possible est illustré sur la figure 4. La première trame Ethernet EF d'un flux est transmise en entier, encapsulée dans un paquet DVB-P, et l'identifiant PHSI de son contexte est également transmis via une extension GSE ou RLE spécifique, comme mentionné plus haut, ce qui permet la constitution de la base de données CDB au niveau du récepteur. Ce dernier envoie un message d'acquittement ACK (également défini dans le cadre de l'extension GSE ou RLE en question) pour assurer au module de suppression d'en-tête de l'émetteur que l'identifiant de contexte est utilisable pour le flux correspondant à la trame EF. Ensuite, les en-têtes Ethernet des trames relevant du même contexte sont supprimées, et la transmission se fait au moyen de paquets DVB-P' de la manière décrite plus haut.

Les trames DVB permettent de véhiculer plusieurs types de protocoles de niveau inférieur ; pour cette raison, les protocoles RLE et GSE prévoient un champ « protocot_type » permettent d'identifier le mode de transport. Ce champ peut être utilisé pour distinguer les paquets encapsulant des trames Ethernet « conventionnelles » ou avec en-tête supprimé. Cela permet notamment de mélanger les deux types de flux.

La figure 4 se rapporte au cas particulier d'une transmission sur le canal aller ; la flèche « t », orientée vers le bas, indique la direction du temps.

Le tableau ci-dessous permet d'apprécier l'avantage technique procuré par l'invention. On considère un cas où la suppression d'en-tête (avec identifiants de contexte de 3 octets) est couplée à une compression d'en-tête de type ROHC. En fonction du protocole considéré, le gain de surdébit lié à la suppression de l'en-tête Ethernet avec tag 802.1Q peut atteindre 73%.

| | RTP/UDP/IP v4/Ethernet | RTP/UDP/Ipv 6/Ethernet | RTP/UDP/IPv 4/ROHC/Ethe rnet | RTP/UDP/IP v6/ROHC/Et hernet |
|---|---|---|---|---|
| Taille avant Suppression d'en-tête | 82 octets | 106 octets | 44 octets | 46 octets |
| Taille après Suppression d'en-tête | 60 octets | 84 octets | 22 octets | 24 octets |
| Gain de compression | 27 % | 21 % | 50 % | 48 % |

L'invention a été décrite en relation au cas particulier d'un système de communication satellitaire basé sur un protocole de type DVB. Toutefois, il ne s'agit pas d'une limitation, essentielle, et d'autres systèmes de communication, satellitaires ou même terrestres, peuvent bénéficier du procédé de suppression d'en-têtes Ethernet décrit ci-dessus.

## Revendications

1. Procédé de transmission de données entre un terminal (TS) et une passerelle (GW), les données étant transportées par des trames Ethernet (EF) comportant un en-tête Ethernet (EH) et une charge utile (EPL), elles-mêmes encapsulées dans des paquets de niveau inférieur (DVB-P) comportant chacun un en-tête (DVB-H) contenant une indication d'adresse d'accès au support (DVB-MAC), le procédé comportant les étapes suivantes :
a) déterminer des contextes communs à des trames dont les en-têtes Ethernet présentent des champs statiques, et définir un identifiant (PHSI) de chaque dit contexte ;
b) associer toutes ou partie desdites trames aux identifiants de contexte correspondants et supprimer lesdits champs de leurs en-têtes Ethernet ; et **caractérisé par** l'étape d'
c) introduire l'identifiant de contexte de chaque trame dont lesdits champs de l'en-tête Ethernet ont été supprimés dans l'en-tête du paquet de niveau inférieur l'encapsulant en remplacement de son indication d'adresse d'accès au support.

2. Procédé selon la revendication 1 comprenant également l'étape suivante :
d) supprimer des informations de contrôle de trame (FCS) desdites trames Ethernet.

3. Procédé selon l'une des revendications précédentes comportant la transmission desdits paquets entre ledit terminal et ladite passerelle au moyen d'une liaison satellitaire.

4. Procédé selon l'une des revendications précédentes dans lequel lesdits paquets sont transmis d'une passerelle vers un terminal et lesdits paquets de niveau inférieur sont des paquets GSE.

5. Procédé selon l'une des revendications 1 à 3 dans lequel lesdits paquets sont transmis d'un terminal vers une passerelle et lesdits paquets de niveau inférieur sont des paquets RLE.

6. Procédé selon l'une des revendications précédentes dans lequel les indications d'adresse d'accès au support des en-têtes desdits paquets de niveau inférieur sont des adresses DVB.

7. Procédé selon l'une des revendications précédentes dans lequel ladite étape a) de détermination des contexte et définition des identifiants est réalisée en créant, de manière statique, une pluralité de connexions entre des terminaux et ladite ou une dite passerelle, chaque connexion correspondant à un dit contexte.

8. Procédé selon l'une des revendications 1 à 6 dans lequel, lors de ladite étape a), lesdits contextes sont déterminés, et les identifiants correspondants sont définis, à la volée par ladite ou chaque passerelle et communiqués à un ou plusieurs dits terminaux.

9. Procédé selon l'une des revendications précédentes comportant également une étape de filtrage des flux au moyen des identifiants de contexte contenus dans les en-têtes desdits paquets de niveau inférieur.

10. Procédé de réception de données transmises entre un terminal (TS) et une passerelle (GW), comportant les étapes suivantes :
i) recevoir des paquets de données comprenant chacun un en-tête (DVB-H') et une charge utile (DVB-PL'), ladite charge utile contenant une trame Ethernet (EF') dont au moins certains champs de l'en-tête Ethernet ont été supprimés ;
ii) extraire un identifiant de contexte (PHSI) à partir d'un champ d'indication d'adresse d'accès au support de l'en-tête d'au moins un dit paquet; et
iii) à partir dudit identifiant, reconstruire les champs de l'en-tête Ethernet de ladite trame qui avaient été supprimés.

11. Procédé selon la revendication 10 dans lequel ladite trame Ethernet (EF') ne comprend pas d'informations de contrôle de trame, le procédé comportant également l'étape suivante :
iv) recalculer des informations de contrôle de trame de ladite trame Ethernet à partir de sa charge utile et de son en-tête reconstruit et réintroduire cette information dans ladite trame.

12. Procédé selon l'une des revendications 10 ou 11 dans lequel la transmission desdits paquets entre ledit terminal et ladite passerelle est effectuée au moyen d'une liaison satellitaire.

13. Procédé selon l'une des revendications 10 à 12 dans lequel lesdits paquets sont transmis d'une passerelle vers un terminal et lesdits paquets de niveau inférieur sont des paquets GSE.

14. Procédé selon l'une des revendications 10 à 12 dans lequel lesdits paquets sont transmis d'un terminal vers une passerelle et lesdits paquets de niveau inférieur sont des paquets RLE.

15. Procédé selon l'une des revendications 10 à 12 dans lequel les indications d'adresse d'accès au support des en-têtes desdits paquets de niveau inférieur sont des adresses DVB.

16. Procédé selon l'une des revendications 10 à 15, comportant une étape de constitution d'une base de données (CDB) associant un ou plusieurs champs d'un en-tête Ethernet à chaque identifiant de contexte, ladite base de données étant utilisée pour la mise en oeuvre de ladite étape iii).

17. Procédé selon la revendication 16 dans lequel ladite étape de constitution d'une base de données est réalisée en créant, de manière statique, une pluralité de connexions entre des terminaux et ladite ou une dite passerelle, chaque connexion correspondant à un dit contexte.

18. Procédé selon la revendication 16 dans lequel, lors de ladite étape de constitution d'une base de données, la passerelle identifie chaque nouveau contexte, détermine un ou plusieurs champs d'en-tête Ethernet associés audit contexte et les communique à un terminal avec un identifiant de contexte correspondant.

## Patentansprüche

1. Verfahren zum Übertragen von Daten zwischen einem Terminal (TS) und einem Gateway (GW), wobei die Daten von Ethernet-Frames (EF) geführt werden, die einen Ethernet-Header (EH) und eine Nutzlast (EPL) umfassen, die wiederum in Paketen einer tieferen Ebene (DVB-P) verkapselt sind, die jeweils einen Header (DVB-H) umfassen, der eine Medienzugangssteuerung-Adressanzeige (DVB-MAC) enthält, wobei das Verfahren die folgenden Schritte beinhaltet:
a) Ermitteln von Kontexten, die Frames gemeinsam sind, deren Ethernet- Header statische Felder haben, und Definieren einer Kennung (PHSI) für jeden Kontext;
b) Assoziieren aller oder einiger der Frames mit den entsprechenden Kontextkennungen und Entfernen der Felder von ihren Ethernet-Headern; und **gekennzeichnet durch** den folgenden Schritt:
c) Einführen der Kontextkennung jedes Frames, in dem die Felder des Ethernet-Headers entfernt wurden, in den Header des Pakets einer tieferen Ebene, in dem er verkapselt ist, als Ersatz für seine Medienzugangssteuerungsadresse.

2. Verfahren nach Anspruch 1, das auch den folgenden Schritt beinhaltet:
d) Entfernen von Frame-Steuerinformationen (FCS) aus den Ethernet-Frames.

3. Verfahren nach einem der vorherigen Ansprüche, das die Übertragung der Pakete zwischen dem Terminal und dem Gateway über eine Satellitenverbindung beinhaltet.

4. Verfahren nach einem der vorherigen Ansprüche, wobei die Pakete von einem Gateway zu einem Terminal übertragen werden und die Pakete einer tieferen Ebene GSE-Pakete sind.

5. Verfahren nach einem der Ansprüche 1 bis 3, wobei die Pakete von einem Terminal zu einem Gateway übertragen werden und die Pakete einer tieferen Ebene RLE-Pakete sind.

6. Verfahren nach einem der vorherigen Ansprüche, wobei die Medienzugriffssteuerung-Adressanzeigen der Header der Pakete einer tieferen Ebene DVB-Adressen sind.

7. Verfahren nach einem der vorherigen Ansprüche, wobei der Schritt a) des Ermittelns von Kontext und Definition der Kennungen durch Erzeugen, auf statische Weise, von mehreren Verbindungen zwischen Terminals und dem oder einem Gateway erfolgt, wobei jede Verbindung einem der Kontexte entspricht.

8. Verfahren nach einem der Ansprüche 1 bis 6, wobei in Schritt a) die Kontexte ermittelt und die entsprechenden Kennungen definiert werden, nach Bedarf durch das oder jedes Gateway, und an einen oder mehrere der Terminals übermittelt werden.

9. Verfahren nach einem der vorherigen Ansprüche, das auch einen Schritt des Filterns der Ströme mittels der in den Headern der Pakete einer tieferen Ebene enthaltenen Kontextkennungen beinhaltet.

10. Verfahren zum Empfangen von Daten, die zwischen einem Terminal (TS) und einem Gateway (GW) übertragen werden, das die folgenden Schritte beinhaltet:
i) Empfangen von Datenpaketen, die jeweils einen Header (DVB-H') und eine Nutzlast (DVB-PL') umfassen, wobei die Nutzlast einen Ethernet-Frame (EF') enthält, in dem wenigstens einige der Felder des Ethernet-Headers entfernt wurden;
ii) Extrahieren einer Kontextkennung (PHSI) von einem Medienzugangssteuerung-Adressanzeigefeld des Headers von wenigstens einem Paket; und
iii) Rekonstruieren, auf der Basis der Kennung, der Felder des Ethernet-Headers des Frames, die entfernt wurden.

11. Verfahren nach Anspruch 10, wobei der Ethernet-Frame (EF') keine Frame-Steuerinformationen umfasst, wobei das Verfahren auch den folgenden Schritt beinhaltet:
iv) Neuberechnen der Frame-Steuerinformationen des Ethernet-Frames auf der Basis seiner Nutzlast und seines rekonstruierten Headers und Neueinführen dieser Information in den Frame.

12. Verfahren nach Anspruch 10 oder 11, wobei die Pakete zwischen dem Terminal und dem Gateway über eine Satellitenverbindung übertragen werden.

13. Verfahren nach einem der Ansprüche 10 bis 12, wobei die Pakete von einem Gateway zu einem Terminal übertragen werden und die Pakete einer tieferen Ebene GSE-Pakete sind.

14. Verfahren nach einem der Ansprüche 10 bis 12, wobei die Pakete von einem Terminal zu einem Gateway übertragen werden und die Pakete einer tieferen Ebene RLE-Pakete sind.

15. Verfahren nach einem der Ansprüche 10 bis 12, wobei die Medienzugangssteuerung-Adressanzeigen der Header der Pakete einer tieferen Ebene DVB-Adressen sind.

16. Verfahren nach einem der Ansprüche 10 bis 15, das einen Schritt des Erstellens einer Datenbank (CDB) beinhaltet, die ein oder mehrere Felder eines Ethernet-Headers mit jeder Kontextkennung assoziiert, wobei die Datenbank zum Implementieren von Schritt iii) benutzt wird.

17. Verfahren nach Anspruch 16, wobei der Schritt des Erstellens einer Datenbank durch Erzeugen, auf statische Weise, von mehreren Verbindungen zwischen Terminals und dem oder einem Gateway erfolgt, wobei jede Verbindung einem der Kontexte entspricht.

18. Verfahren nach Anspruch 16, bei dem in dem Schritt des Erstellens einer Datenbank das Gateway jeden neuen Kontext identifiziert, ein oder mehrere mit dem Kontext assoziierte Ethernet-Header-Felder ermittelt und sie zu einem Terminal mit einer entsprechenden Kontextkennung sendet.

## Claims

1. A method for transmitting data between a terminal (TS) and a gateway (GW), the data being carried by Ethernet frames (EF) comprising an Ethernet header (EH) and a payload (EPL), which are in turn encapsulated in lower level packets (DVB-P) each comprising a header (DVB-H) containing a media access control address indication (DVB-MAC), the method comprising the following steps:
a) determining contexts that are common to frames, the Ethernet headers of which have static fields, and defining an identifier (PHSI) for each of said contexts;
b) associating all or part of said frames with the corresponding context identifiers and suppressing said fields from their Ethernet headers; and **characterised by** the step of:
c) introducing the context identifier of each frame, for which said fields of the Ethernet header have been suppressed, into the header of the lower level packet that encapsulates it as a replacement for its media access control address.

2. The method according to claim 1, also comprising the following step:
d) suppressing frame control information (FCS) from said Ethernet frames.

3. The method according to any one of the preceding claims, comprising the transmission of said packets between said terminal and said gateway by means of a satellite link.

4. The method according to any one of the preceding claims, wherein said packets are transmitted from a gateway to a terminal and said lower level packets are GSE packets.

5. The method according to any one of claims 1 to 3, wherein said packets are transmitted from a terminal to a gateway and said lower level packets are RLE packets.

6. The method according to any one of the preceding claims, wherein the media access control address indications of the headers of said lower level packets are DVB addresses.

7. The method according to any one of the preceding claims, wherein said step a) of determining the context and definition of the identifiers is realised by statically creating a plurality of connections between terminals and the or a said gateway, with each connection corresponding to one said context.

8. The method according to any one of claims 1 to 6, wherein, during said step a), said contexts are determined, and the corresponding identifiers are defined, as desired by said gateway or by each gateway and are communicated to one or more of said terminals.

9. The method according to any one of the preceding claims, also comprising a step of filtering the streams by means of the context identifiers contained in the headers of said lower level packets.

10. The method for receiving data transmitted between a terminal (TS) and a gateway (GW), comprising the following steps:
i) receiving data packets each comprising a header (DVB-H') and a payload (DVB-PL'), said payload containing an Ethernet frame (EF'), in which at least some of the fields of the Ethernet header have been suppressed;
ii) extracting a context identifier (PHSI) from a media access control address indication field of the header of at least one of said packets; and
iii) reconstructing, on the basis of said identifier, the fields of the Ethernet header of said frame that had been suppressed.

11. The method according to claim 10, wherein said Ethernet frame (EF') does not comprise frame control information, said method also comprising the following step:
iv) recomputing frame control information of said Ethernet frame on the basis of its payload and of its reconstructed header and reintroducing this information into said frame.

12. The method according to any one of claims 10 or 11, wherein said packets are transmitted between said terminal and said gateway by means of a satellite link.

13. The method according to any one of claims 10 to 12, wherein said packets are transmitted from a gateway to a terminal and said lower level packets are GSE packets.

14. The method according to any one of claims 10 to 12, wherein said packets are transmitted from a terminal to a gateway and said lower level packets are RLE packets.

15. The method according to any one of claims 10 to 12, wherein the media access control address indications of the headers of said lower level packets are DVB addresses.

16. The method according to any one of claims 10 to 15, comprising a step of compiling a database (CDB) associating one or more fields of an Ethernet header with each context identifier, said database being used to implement said step iii).

17. The method according to claim 16, wherein said step of compiling a database is carried out by statically creating a plurality of connections between the terminals and the or a said gateway, with each connection corresponding to one of said contexts.

18. The method according to claim 16, wherein, during said step of compiling a database, the gateway identifies each new context, determines one or more Ethernet header field(s) associated with said context and sends them to a terminal with a corresponding context identifier.
